# EUROPEAN PATENT APPLICATION

(11) **EP 1 703 299 A2**
(43) Date of publication of application: **20.09.2006**
(21) Application number: 06001356.2
(22) Date of filing: 23.01.2006
(51) Int. Cl.: G01S 13/93

(54) **Object detector for a vehicle**

(30) Priority: 15.03.2005 JP 2005073683
(71) Applicant: OMRON CORPORATION, Kyoto-shi, Kyoto 600-8530 (JP)
(72) Inventor: Fujioka, Ryoji Omron Corporation, Shikoji-dori Shimogyo Kyoto-shi 600-8530 (JP); Ando, Tanichi Omron Corporation, Shikoji-dori Shimogyo Kyoto-shi 600-8530 (JP)
(74) Representative: Kilian, Helmut

(57) **Abstract**

An on-vehicle object detector has both a relative position measuring device and an image-taking device. The relative position measuring device is for scanning a frontal area with a beam of electromagnetic waves and measures distance L1 and direction to an object that reflects the waves. The image-taking device is for obtaining an image above a traffic lane in front and measures distance L2 to an object detected on this image. The vertical angle of spread of the electromagnetic beam is reduced if it is indicated by these devices that there is an object for which |L1 - L2| satisfies a specified condition, indicating that there is an overhead road sign which is likely to affect the accuracy of measurement.

## Description

Priority is claimed on Japanese Patent Application 2005-073683 filed March 15, 2005.

### Background of the Invention

This invention relates to a device for detecting the relative position of an object that may be present in front by scanning the frontal area by an electromagnetic beam and more particularly to an on-vehicle object detector adapted to eliminate error in measuring a distance especially in the presence of an object such as a road sign plate or the like (hereinafter referred to as a road sign) above the traffic lane.

Devices using an electromagnetic radar beam to scan an frontal area and measuring the time for reflected beam to return to calculate the distance to an object that may be present in front are coming to be installed to mobile bodies and especially to motor vehicles for a traffic control. If the object reflecting the beam is another vehicle, the measured results can be used for controlling the speed of one's own vehicle. If a two-dimensional bema is used, a two-dimensional relative position of a beam-reflecting object can be determined.

When a road sign is present above the traffic lane, however, a conventional device of the type described above can measure its distance but cannot determine whether it is a road sign of a vehicle (or an obstacle that has fallen onto the road surface).

In view of this problem, Japanese Patent Publication Tokkai 2003-14844 has disclosed a method of using only a distance detector to determine whether a detected object is a road sign or a vehicle from the number of detection points of reflected waves and the width of the reflecting object. If the reflecting object is a large truck having a width about equal to that of a road sign and especially in the case of an aluminum van with a high reflectivity, however, the number of detection points becomes large and it becomes difficult by this method to correctly determine the nature of the detected object.

Japanese Patent Publication Tokkai 2002-303671 has disclosed a method of using a distance detector and an image-taking device for taking the image of the front and, if a reflecting object is found on the traffic lane detected by the image-taking device, following up on the reflection from this object as its own vehicle moves on and concluding that this object is a road sign if this reflecting body (or the reflection from this body) disappears. In the case of a large reflecting object, this method also has similar problems. In the case of a relatively low object such as a railroad overpass structure, for example, it is necessary for the own vehicle to come fair close until the reflected waves disappear and there may be an unreasonable delay before a correct identification can be made.

Japanese Patent Publication Tokkai 8-156723 has disclosed still another method according to which a distance detector and an image-taking device for taking image of the front are provided and the image-taking device has the function of obtaining the distance to an object on the traffic lane based on image data such that a road sign and a front going vehicle are distinguished because if they are separated, the distance to the road sign measured by the distance detector and the distance to the front going vehicle measured by the image-taking device will be significantly different. For a situation where the distances measured by the distance detector and the image-taking device are the same or where both devices are identifying the same object although their distances are somewhat different, a technology is also disclosed for concluding that the distance to the farther object is considered the distance to the object on the traffic lane.

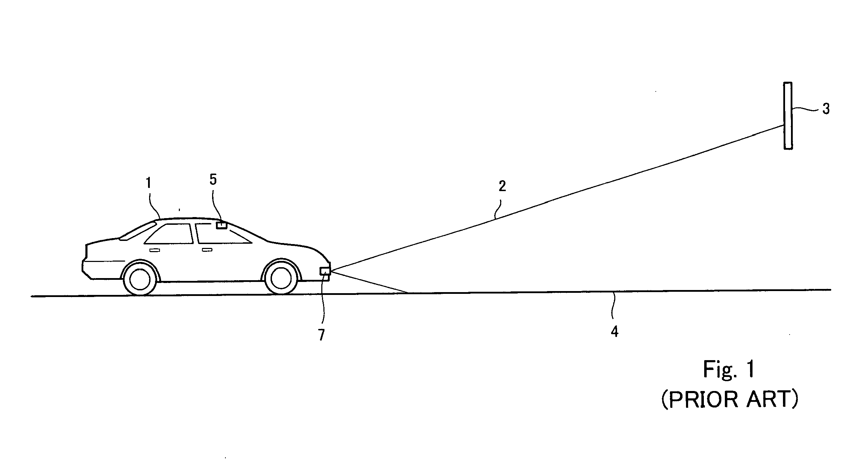

This method encounters a problem when a front going vehicle approaches a road sign first and then moves away from it. This problem will be explained next more in detail with reference to Fig. 1 showing one's own vehicle (hereinafter referred to as the own vehicle 1) emitting a detection beam 2 which is being reflected by a road sign 3 in front. Numeral 4 indicates the traffic lane on which the own vehicle 1 is traveling and numeral 5 indicates an image-taking device adapted not only to take an image of its front but also to measure the distance to an object detected on the image obtained thereby.

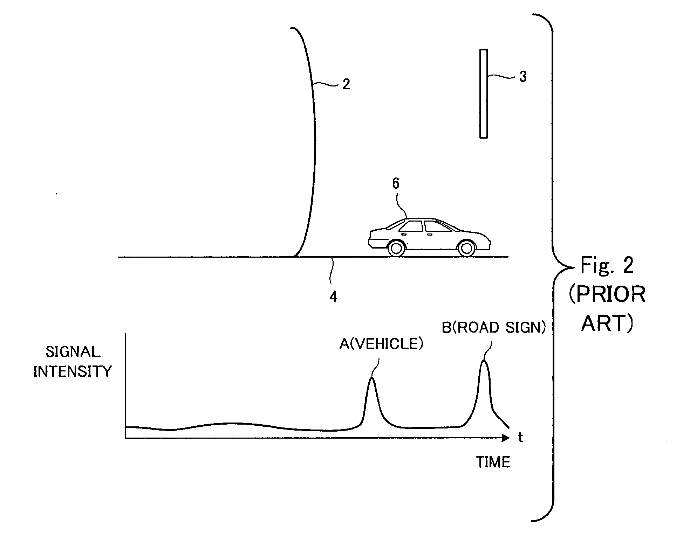

When there is a front going vehicle 6 which is still sufficiently far in front of the road sign 3, as shown in Fig. 2, the detection beam 2 emitted from the own vehicle 1 (not shown in Fig. 2) is reflected both by the road sign 3 and the front going vehicle 6 but reflected waves A from the front going vehicle 6 are formed first and reflected waves B from the road sign B are formed later and received at the position of the own vehicle 1 as shown in Fig. 2.

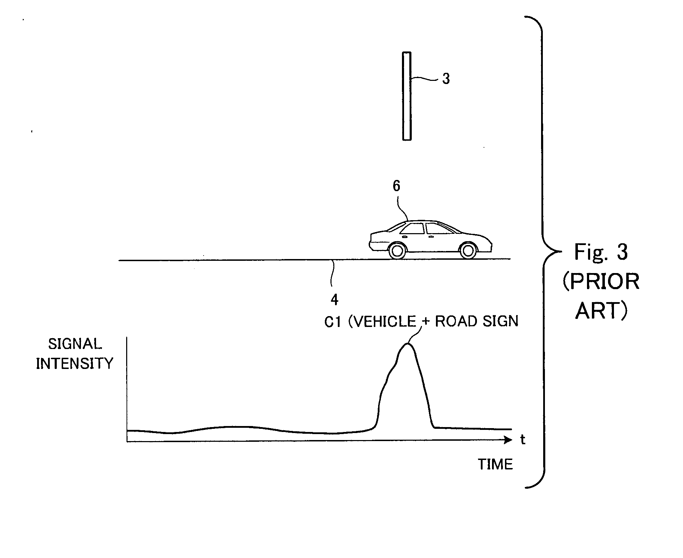

At a later time as the front going vehicle 6 is at the same distance as the road sign 3 from the own vehicle 1, the reflected waves A and B are received at the same time together as synthesized waves C1 as shown in Fig. 3. Since the peak of the synthesized waves C1 indicates a position between those of the front going vehicle 6 and the road sign 3, this means that the distance L1 measured at this moment by the distance detector is longer than the distance L2 measured by the image-taking device 5. Since the longer distance is accepted as the actual distance to the detected object in front according to the disclosure in Japanese Patent Publication Tokkai 8-156723, L1 is the distance that is selected.

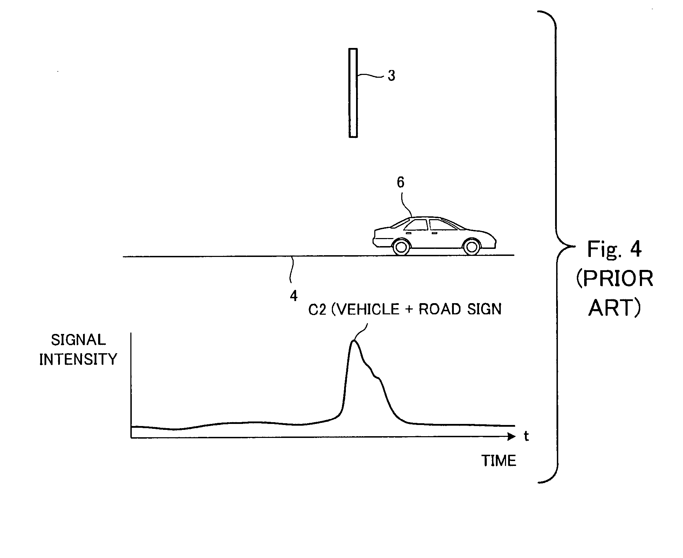

Fig. 4 shows the moment immediately after the front going vehicle 6 passes the position of the road sign 3 with the synthesized waves C2 reflected both from the front going vehicle 6 and the road sign 3. Since the peak of the synthesized waves C1 indicates a position between those of the front going vehicle 6 and the road sign 3, this means that the distance L1 measured at this moment by the distance detector is shorter than the distance L2 measured by the image-taking device 5. Since the longer distance is accepted as the actual distance as explained above, L2 is the distance that is selected at this moment.

Thus, although the front going vehicle 6 is traveling at a constant speed, its distance will appear to increase as it passes the position of the road sign 3. If the shorter distance were to be selected instead, however, the front going vehicle 6 will appear to be closer.

### Summary of the Invention

It is therefore an object of this invention to provide an improved on-vehicle object detector capable of correctly detecting a front going vehicle relative to a road signs or the like such that the distance to an object on the road in the same traffic lane can be correctly measured without being influenced by the presence of roadside structures such as road signs.

An on-vehicle object detector according to this invention is characterized as comprising both a relative position measuring device and an image-taking device. The former is for scanning a frontal area with a beam of electromagnetic waves and thereby measuring, based on reflected waves of the beam from an object, distance L1 and direction to this reflecting object, and the latter is for obtaining an image above a traffic lane in front and measuring distance L2 to an object on this traffic lane detected on this image. The relative position measuring device further serves to reduce the vertical angle of spread of the beam by a specified angle from an original angle if it is indicated by these devices that there is an object for which condition K1 ≤ |L1 - L2| ≤ K2 is satisfied where K1 is zero or a preliminarily determined measurement error and K2 is a preliminarily determined value greater than K1.

In the above, the image-taking device may be a camera and the distance L2 may be obtained as L2 = FH/y₀ where F is the focal length of the lens of the camera, H is the height of the camera and y₀ is the coordinate in the vertical direction of the object of interest on the image. If there is a front going vehicle in the same traffic lane but there is no road sign or the like, the distance L2 to such a front going vehicle thus measured by the image-taking device is nearly equal to the distance L1 obtained by the relative position measuring device. Since the distance L1 measured by the relative position measuring device is more accurate, this distance is relied upon to control the speed of the own vehicle when there is a substantial distance between the front going vehicle and near-by road signs and the like.

When the front going vehicle passes under a road sign, however, an error begins to appear in the distance L1 measured by the relative position measuring device, as explained above with reference to Figs. 3 and 4. For this reason, the vertical angle of spread of the beam is reduced according to this invention such that road signs most typically found above traffic lanes will be outside the field of vision of the beam. If the beam is thus adjusted, the beam will irradiate only the front going vehicle (and obstacles on the road surface) and the error on the distance L1 due to road signs is eliminated.

Such control of the angle of spread of the beam is effected when the condition K1 ≤ |L1 - L2| ≤ K2 is satisfied where K1 is indicative of the measurement error by the relative position measuring device and by the image-taking device. In general, the accuracy in measurement is greater by the former. K2 is of a value slightly larger than the error in L2 as of when the front going vehicle is passing or has just passed under the road sign as shown in Figs. 3 and 4. The value of |L1 - L2| will be less than K1 in the situation shown in Fig. 2 but comes to satisfy the condition K1 ≤ |L1 - L2| ≤ K2 in the situation of Figs. 3 and 4, thereafter becoming less than K1 again. Thus, it is possible to conclude that the front going vehicle is passing under a road sign by monitoring the value of |L1 - L2| and this is when the beam angle is changed according to this invention such that the road sign will not be irradiated.

The effects of a road sign can be suppressed even further by controlling the beam so as to be directed to the central height of the front going vehicle when the condition K1 ≤ |L1 - L2| ≤ K2 comes to be satisfied.

After the angle of spread of the beam is reduced, it is preferable to increase it back to the original angle after the effect of the road sign ceases to exist because if the angle of upper spread of the beam is too small, there is a possibility of missing a front going vehicle or an obstacle when the road is downwardly sloping.

If the downward slope of the road in front is large, an overhead road sign at a large distance may appear to be close to the road surface. In such a situation, however, the difference between the distances L1 and L2 measured by the relative position measuring device and the image-taking device becomes large. In such a situation, the control of the beam angle as described above is not carried out.

### Brief Description of the Drawings

Fig. 1 is a schematic side view of a detection beam being reflected by a road sign.
Fig. 2 shows a situation where the detection beam is being reflected by a front going vehicle and a road sign when they are sufficiently far apart.
Fig. 3 shows another situation where the waves reflected by the road sign and the front going vehicle passing under it are synthesized.
Fig. 4 shows still another situation where the waves reflected by the road sign and the front going vehicle which has passed under it are synthesized.
Fig. 5 is a schematic side view showing the positional relationship between a front going vehicle and the own vehicle provided with an on-vehicle object detector of this invention.
Fig. 6 is a drawing for showing a position for installing the image-taking device.
Fig. 7 is an example of image obtained by the image-taking device.
Fig. 8 is a block diagram of an on-vehicle object detector embodying this invention.
Figs. 9 and 10 are flowcharts of the on-vehicle object detector of this invention.
Fig. 11 is a schematic side view showing the positional relationship between the own vehicle and a road sign when the road is sloping downward.
Fig. 12 is an example of image obtained by the image-taking device when the road is sloping downward.

### Detailed Description of the Invention

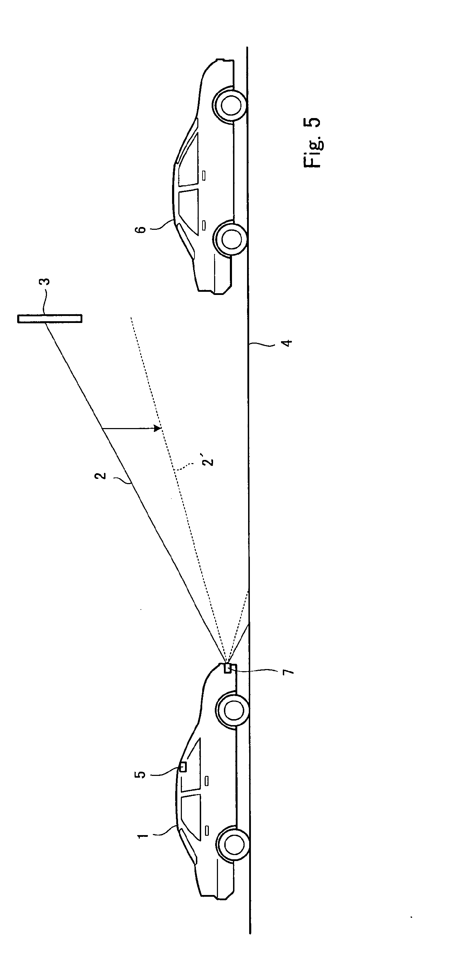

Fig. 5 (wherein like components are indicated by the same numerals as used and explained above) shows the positional relationship between a vehicle (the own vehicle) provided with an on-vehicle object detector embodying this invention and a front going vehicle 6. As shown schematically, the on-vehicle object detector according to this embodiment of the invention is comprised of a relative position measuring device 7 and an image-taking device 5. The relative position measuring device 7 includes a near infrared laser radar (hereinafter referred to as L/R) for emitting a near infrared laser beam (detection beam) 2 forward to measure the distance to an object that reflects it and the relative position of the beam-reflecting object based on the beam direction data. The image-taking device 5 includes a cameral for taking the image in front of the vehicle (the own vehicle) to which it is installed. If a CMOS camera with a high dynamic range (herein referred to as an HDRC) is used, an image of a dependable quality can be obtained even when the contrast in brightness is very large such as when the road surface is dark while the surrounding is extremely bright or when the own vehicle is entering or coming out of a tunnel. A CCD camera may be used instead of a HDRC.

The relative position measuring device 7 is adapted to carry out a one-dimensional (horizontal) scan or a two-dimensional (horizontal and vertical) scan with the detection beam 2 of the L/R and to measure the relative position of an object based on the time taken by the beam reflected thereby is received as well as the direction of the reflected beam. The vertical angle of spread of the detection beam 2 may be controllable. If it is controllable and is appropriately controlled as shown by symbol 2' in Fig. 5, the beam may be prevented from reaching road signs.

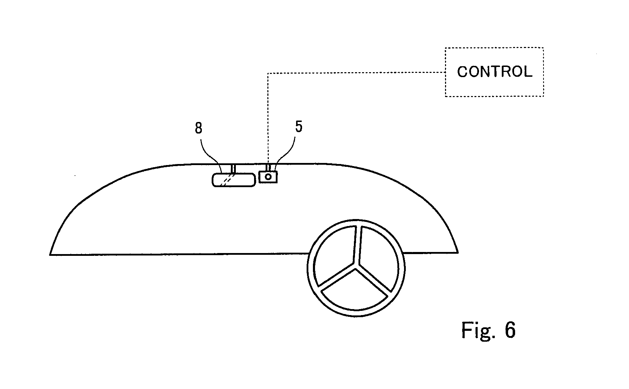

The image-taking device 5 may be set near the room mirror 8 inside the vehicle as shown in Fig. 6 such that the image of the front of the own vehicle can be taken at a convenient image angle.

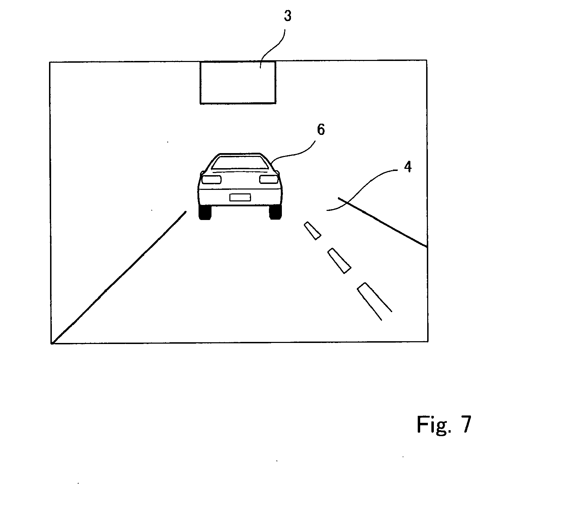

Fig. 7 is an example of an image of the front including traffic lines 4, a front going vehicle 6 and an overhead road sign 3 by the image-taking device 5. According to the present invention, distances are measured both by the relative position measuring device 7 and by the image-taking device 5. The distance measured by the relative position measuring device 7 is indicated by symbol L1 and the distance measured by the image-taking device 5 is indicated by symbol L2.

It may be noted that the image-taking device 5 can obtain the distance L2 to an object appearing on an image taken thereby such as shown in Fig. 7. Let us assume that the camera of the image-taking device 5 is horizontal and at a height of H from the road surface. If the focal length of the lens of the camera is F and the y-coordinate (in the vertical direction) of the object of interest on the image is y₀, L2 may be obtained as L2 = FH/y₀ (referred to as Formula (A)). It is usually the case, however, the distance L1 measured by the relative position measuring device 1 is more accurate than the distance value L2 calculated as explained above.

Both the relative position measuring device 7 and the image-taking device 5 are connected to an object detection part 9 provided inside the own vehicle.

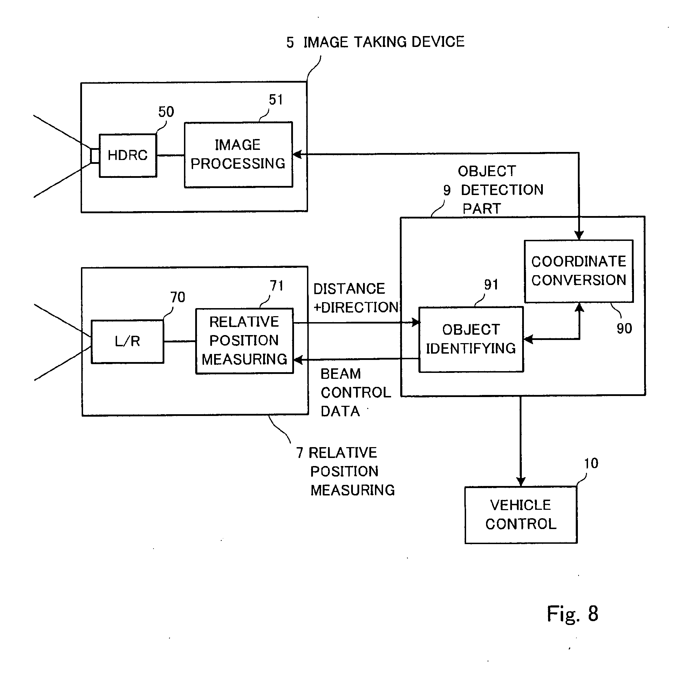

Fig. 8 shows the structure of the on-vehicle object detector. The relative position measuring device 7 is comprised of the L/R and a relative position measuring part 71. Data on distances and directions of objects by which beams are reflected and returned are outputted from the relative position measuring part 71. The image-taking device 5 is comprised of an HDRC 50 and an image processing part 51. The object detection part 9 is provided with a coordinate conversion part 90 for carrying out the mapping of direction data on the reflecting object obtained from the relative position measuring device 7 and the image obtained from the image-taking device 5 and an object identifying part 91 for identifying objects.

The relative position measuring part 71 of the relative position measuring device 7 and the image processing part 51 of the image-taking device 5 are adapted to exchange data between them through the object detection part 9. The object detection part 9 serves to output to the relative position measuring device 7 beam control data for controlling the spread angle of the beam based on the result of image detection by the image-taking device 5 and data received from the relative position measuring device 7.

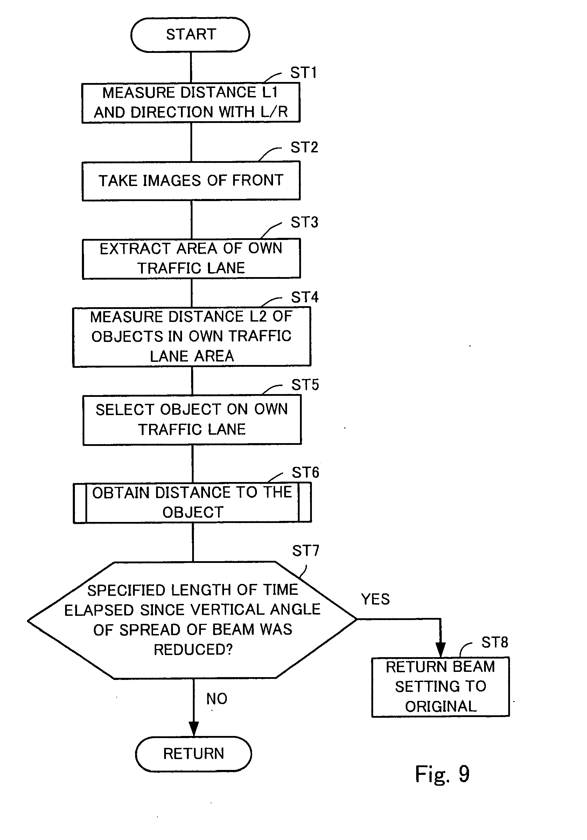

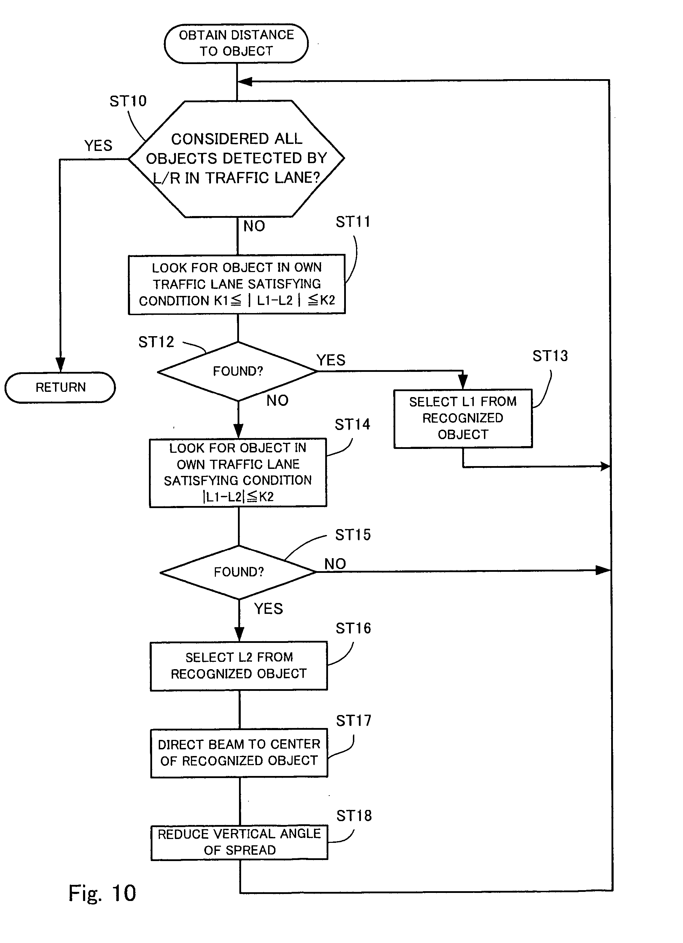

Next, Figs. 9 and 10 are referenced to explain the operations of the on-vehicle object detector embodying this invention described above.

After distances L1 to and directions of objects in front are measured by the L/R 70 (Step ST1) and an image in front of the own vehicle is obtained by the HDRC 5 (Step ST2), an area on the own traffic lane is extracted from the obtained image (Step ST3) and distances L2 to objects within this area are calculated (as L2 = FH/y₀ as explained above). Next, from the objects to which the distance could be measured, those in the own traffic lane are selected (Step ST5) and their distances L are obtained (Step ST6).

In the above, if there is a front going vehicle in the same traffic lane as the own vehicle, the distance obtained in Step ST6 becomes the distance to the front going vehicle. This distance is then transmitted to a vehicle control part 10 (shown in Fig. 8) and used thereby for controlling the speed of the own vehicle 1. If a road sign 3 is above the own traffic lane, the distance obtained in Step ST6 becomes the distance to the road sign 3. Even when there are both a vehicle and a road sign, or a plurality of vehicles and/or road signs in front, it is possible to determine whether each of the detected light-reflecting object is a vehicle or a road sign and to measure the distance thereto because the system is provided, as explained above, with the coordinate conversion part 90 for carrying out the mapping of direction data on the reflecting object obtained from the relative position measuring device 7 and the image obtained from the image-taking device 5 and the object identifying part 91 for identifying objects.

After a distance value is thus obtained in Step ST6, it is determined whether or not a specified length of time has elapsed (Step ST7) since the vertical angular spread of the detection beam 2 was previously reduced. If the specified length of time has since elapsed (YES in Step ST7), the vertical angular spread of the detection beam 2 is increased back to the original default value (Step ST8).

Processes in Step ST6 are explained next more in detail with reference to Fig. 10.

Stated briefly, Step ST6 is where objects on the own traffic lane detected by the L/R 70 and those detected by the image-taking device 5 are correlated. Thus, it is checked to determine whether a correlation has been established between all pairs of detected objects (Step ST10) and this is repeated until correlation is established between all pairs of objects detected by the L/R 70 and the image-taking device 5 (YES in Step ST10).

Until correlation is established between all pairs of objects (NO in Step ST10), a search is made for objects for which the condition |L1 - L2| < K1 is satisfied where K1 is a relatively small value representing the error in measurements of distance by the L/R 70 and the image-taking device 5 (Step ST 11). If an object satisfying this condition is found (YES in Step ST12), this object is recognized as the object on the own traffic lane and L1 is selected as the distance to that object (Step ST13). Thus, if there is a front going vehicle on the own traffic lane but there is no road sign, this front going vehicle is recognized and the distance is selected as L1. If there is no front going vehicle in the own traffic lane but there is a road sign above, this road sign is recognized and L1 is selected as the distance. This is the same when there is an fallen object on the road surface.

If there is an object found satisfying the condition referred to above, a search is made for an object satisfying the condition |L1 - L2| ≤ K2 (Step ST14) where K2 is larger than K1, having a value greater than the error that will be caused to L1 as shown in Fig. 3 when the front going vehicle 6 passes under a road sign 3 or as shown in Fig. 4 when the front going vehicle has just passed under the road sign 3. If an object satisfying this condition is found (YES in Step ST15), this object is recognized as an object on the own traffic lane and L2 is selected as the distance to that object (Step ST16). Thereafter, the detection beam 2 is adjusted and directed to the central height of the detected object (Step ST17) with its vertical angle of spread reduced by a specified amount (Step ST18).

The condition of Step ST14 comes to be satisfied when the front going vehicle 6 has passed under a road sign 3, as shown in Figs. 2 and 3. Thus, the detection beam 2 may be adjusted so as not to illuminate the road sign 3 and to be directed to the central height of the front going vehicle 6 such that the effect of the road sign 3 can be eliminated and the distance to the front going vehicle 6 can be obtained more reliably.

At the point in time of Step ST14, the distance L2 is selected because the distance L1 includes an error. Since the detection beam is appropriately controlled in Steps ST17 and 18, as explained above, the distance to the front going vehicle 6 may be measured after Step ST 18 by using the detection beam 2'.

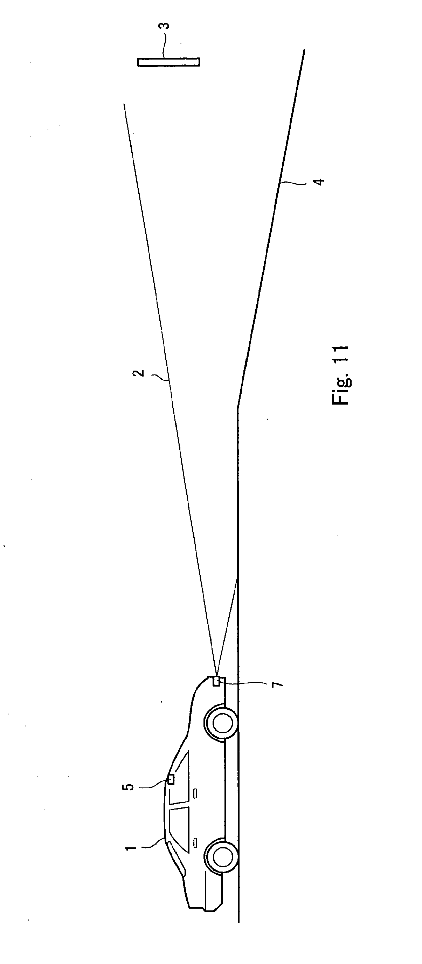

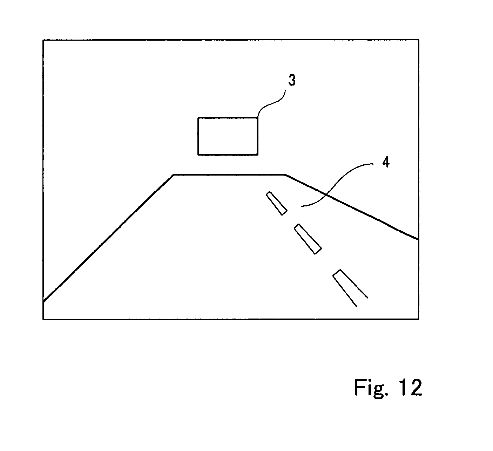

If the road is sloping downward in front of the own vehicle as shown in Figs. 11 and 12, the distances L1 and L2 to the road sign 3 over the slope measured by the L/R 70 and the image-taking device 5 may come to be significantly different. In such a situation, if there is a front going vehicle on the same traffic lane as the own vehicle, distances L 1 to this front going vehicle and to the road sign 3 measured by the L/R 70 may become different while distances L2 to the front going vehicle and to the road sign 3 measured by the image-taking device 5 may be the same.

Explained more in detail, suppose that an image as shown in Fig. 7 has been obtained where a road sign is over the portion of the downwardly sloping road surface in front as shown in Fig. 11. In the image process, the distance to each photographed object is obtained by aforementioned Formula (A). Thus, if the road sign were over the same road surface on which the own vehicle is traveling, its image would be at a higher position and a correct distance value would be obtained by Formula (A). If the image is obtained under a condition such as shown in Fig. 11, however, the image of the road sign appears at a lower height and a shorter distance is obtained by calculation according to Formula (A). In other words, if a front vehicle and a road sign are nearly at the same height on the obtained image, the calculated distances to them become also nearly the same, independent of what their actual distances are.

Although Fig. 8 shows an example with the image-taking device 5, the relative position measuring device 7 and the object detection part 9 independently provided, the functions of the object detection part 9 may be provided to the image-taking device 5 or the relative position measuring device 7. Similarly, the image processing part 51 in the image-taking device 5 or the relative position measuring part 71 of the relative position measuring device 7 may be provided inside the object detection part 9.

In summary, the distance to a front going vehicle and various obstacles can be correctly obtained by the present invention even in the presence of a road sign above the traffic lane traveled by the own vehicle.

## Claims

1. An on-vehicle object detector comprising:
a relative position measuring device for scanning a frontal area with a beam of electromagnetic waves and thereby measuring, based on reflected waves of said beam from an object, distance L1 and direction to said object; and
an image-taking device for obtaining an image above a traffic lane in front and measuring distance L2 to an object on said traffic lane detected on said image;
wherein said relative position measuring device serves to reduce the vertical angle of spread of said beam by a specified angle from an original angle if said relative position measuring device and said image-taking device indicate that there is an object for which condition K1 ≤ |L1 - L2| ≤ K2 is satisfied where K1 is zero or a preliminarily determined measurement error and K2 is a preliminarily determined value greater than K1.

2. The on-vehicle object detector of claim 1 wherein said relative position measuring device further serves to adjust said beam, when there is an object on said traffic lane in front satisfying said condition, so as to be directed to a central height of said object.

3. The on-vehicle object detector of claim 1 wherein said relative position measuring device further serves to change the vertical angle of spread of said beam back to said original angle when a specified length of time has passed after said vertical angle of spread is reduced by said specified angle.

4. The on-vehicle object detector of claim 2 wherein said relative position measuring device further serves to change the vertical angle of spread of said beam back to said original angle when a specified length of time has passed after said vertical angle of spread is reduced by said specified angle.
